# EUROPEAN PATENT APPLICATION

(11) **EP 2 538 600 A1**
(43) Date of publication of application: **26.12.2012**
(21) Application number: 11777146.9
(22) Date of filing: 26.04.2011
(51) Int. Cl.: H04L 1/16

(54) **METHOD AND BASE STATION SUBSYSTEM (BSS) FOR ACCELERATING ACKNOWLEDGEMENT OF RADIO LINK CONTROL (RLC) WINDOW STATE**

(30) Priority: 06.05.2010 CN 201010167323
(71) Applicant: ZTE Corporation, Shenzhen, Guangdong 518057 (CN)
(72) Inventor: ZHU, Jinyin, Shenzhen Guangdong 518057 (CN); WANG, Zhiying, Shenzhen Guangdong 518057 (CN); LV, Hongtao, Shenzhen Guangdong 518057 (CN)
(74) Representative: Manitz, Finsterwald & Partner GbR
(86) International application number: PCT/CN2011/073337
(87) International publication number: WO 2011/137725

(57) **Abstract**

A method and a Base Station Subsystem (BSS) for accelerating a Radio Link Control (RLC) window state acknowledgement are disclosed in the present invention. The method includes: at a signaling point in the Mobile Station (MS) reselection or handover process, judging whether there is an uplink and/or a downlink Temporary Block Flow (TBF) corresponding to the MS, wherein, if there is an uplink TBF corresponding to the MS, then for an uplink RLC sending-receiving window, a BSS continuously sends M uplink acknowledgements to the MS; if there is a downlink TBF corresponding to the MS, then for a downlink RLC sending-receiving window, the BSS sets Relative Reserved Block Period (RRBP) indicators in N data blocks allocated in a corresponding downlink TBF.

## Description

### Technical Field

The present invention relates to the field of mobile communication technology, and in particular, to a method and base station subsystem for accelerating a radio link control (RLC) window state acknowledgement.

### Background of the Related Art

The Radio Link Control (RLC) sending-receiving window is a part of the mechanism that a Base Station Subsystem (BSS) and a Mobile Station (MS) performs an air interface data transmission, the data bitmap corresponding to the RLC sending window is confirmed in the uplink/downlink acknowledgement signaling of the air interface, and the air interface data are transmitted during the confirmation process of the data bitmap within the range of the RLC window.

The air interface data transmission procedure in the RLC sending-receiving window mechanism is described in detail in the 3^{rd} generation participation project (3GPP) 44.060 protocol, during the RLC data transmission process, the uplink RLC sending window data bitmap is confirmed through the uplink acknowledgement sent by the BSS side, and the downlink RLC sending window data bitmap is confirmed through the downlink acknowledgement sent by the downlink mobile station (MS). In the RLC downlink data transmission process, the Relative Reserved Block Period (RRBP) indicator of the media access control (MAC) header controls the mobile station (MS) to send the downlink confirmation of the current RLC window data.

The Network Assisted Cell Change (NACC for short) procedure in the NC0/NC1 (Network Control, NC for short) mode and the Packet Cell Change Order (PCCO for short) procedure in the NC2 mode are two procedures of the mobile station (MS) performing the cell reselection under the PS service packet transmission state. Wherein,

in the corresponding NACC process in the NC0/NC1 mode, the mobile station (MS) sends the Packet Cell Change Notification (PCCN) message to the base station controller (BSC) of the BSS side under the packet transmission state. The base station controller (BSC) sends the neighbor system message to the mobile station (MS) through the Packet Neighbor Cell Data (PNCD) message after receiving the PCCN message, thus the time of listening for the system message after the MS reselects the new cell is saved, and the access speed of the new cell when the MS reselects the cell is accelerated, and the service interruption time caused by the cell reselection is shortened;

In the corresponding Packet Cell Change Order (PCCO) procedure under the NC2 mode, the MS cell reselection is controlled by the network, the BSS makes a reasonable judgment on the cell reselection through the information obtained by fully utilizing the network and notifies the MS to performs the cell reselection by sending the PCCO message, thus the optimal allocation of the service in the network is realized, and the frequent and independent reselection of the MS can be reduced, and the data transmission utilization ratio of the Temporary Block Flow (TBF) is improved.

In the packet service (PS) handover procedure, the handover of one or more packet flows of the MS from the source cell to the target cell is completed, and by pre-allocating the Radio Resource distributed to the target cell and notifying the target cell of the system message, the MS hands over from the source cell to the target cell, and the mobility performance of the packet data service is improved.

The each above-mentioned procedure accelerates the speed of the cell reselection /handover. Before the mobile station (MS) performs the cell reselection or handover, the MS and BSS perform the data transmission at the air interface through the RLC sending-receiving window. The RLC sending-receiving window appears in pairs, and for the TBF in one direction, the sending party is the sending window, and the receiving party is the receiving window. The uplink RLC sending-receiving window and the downlink RLC sending-receiving window are independent respectively. The uplink RLC sending-receiving window is: the sending window of the MS + the receiving window of the BSS; the RLC downlink sending-receiving window is: the sending window of BSC + the receiving window of the MS.

If the cell is reselected or the PS is handed over, the sending-receiving window between the MS and the BSS will be released, the un-respondent RLC data block in the window will be released, and the sending window considers that the sending and receiving of the uplink data corresponding to the RLC data block is not completed. After the MS accesses the new cell, these upper layer data which are not sent and received successfully will be sent again. If part of the un-confirmed data block is already received at the RLC receiving window and is already organized as the upper layer data, then the data which are sent again will be received repeatedly; meanwhile, when the BSS supports the cell reselection Logical Link Control (LLC) handover function, the RLC data block which has not been acknowledged in the sending window will be handed over before releasing; if the RLC sending window buffers a large amount of the RLC blocks because of the influence of the factors such as the radio quality of air interface, etc., then the data bulk of the upper logical link control (LLC) of the handover and retransmission will be increased, and the BSS performance will be affected.

### Summary of the Invention

The technical problem to be solved by the present invention is to provide a method and base station subsystem for accelerating a Radio Link Control (RLC) window state acknowledgement, used to accelerate the process of the RLC window state acknowledgement, solve the problem that acknowledgement can not be performed in part of the RLCs existing in the reselection / handover process in the related art, and prevent the un-acknowledged RLC data from being sent repeatedly after the reselection or the handover at present.

In order to solve the above-mentioned problem, the present invention provides a method for accelerating a Radio Link Control (RLC) window state acknowledgement, comprising:
at a signaling point in a Mobile Station (MS) re-selection or handover process, judging whether there is an uplink and/or a downlink Temporary Block Flow (TBF) corresponding to the MS, wherein:
   if there is an uplink TBF corresponding to the MS, then for an uplink RLC sending-receiving window, a BSS continuously sends M uplink acknowledgements to the MS;
   if there is a downlink TBF corresponding to the MS, then for a downlink RLC sending-receiving window, the BSS sets Relative Reserved Block Period (RRBP) indicators in N data blocks allocated in a corresponding downlink TBF;
   wherein, the M and N are parameters set independently and separately, and M and N=1, 2, 3, etc.

The abovementioned method further has the following characteristics:
the signaling point is that when the BSS receives Packet Cell Change Notification (PCCN) message sent by the MS, in a network control NC0/NC 1 mode,
the BSS receives the PCCN message sent by the MS, and if there is an uplink TBF corresponding to the MS, M uplink acknowledgements are organized and sent to the mobile station (MS) in a downlink Packet Associated Control Channel (PACCH) corresponding to an uplink channel allocated by the uplink TBF; and
the BSS receives the PCCN message sent by the MS, and if there is a downlink TBF corresponding to the MS, the RRBP indicators are set in N data blocks allocated in the downlink TBF subsequently.

The abovementioned method further has the following characteristics:
the signaling point is that when the BSS sends Packet Neighbor Cell Data (PNCD) message, in the network control NC0/NC1 mode,
by counting the number of pieces of the PNCD message in advance, when the BSS sends the M1th PNCD counted backwards, if there is an uplink TBF corresponding to the mobile station (MS), the BSS organizes and sends M uplink acknowledgements on a Packet Associated Control Channel (PACCH) corresponding to an uplink channel allocated by an uplink TBF beginning from the M1th PNCD counted backwards;
by counting the number of pieces of the PNCD message in advance, when the BSS sends the N1th PNCD counted backwards, if there is a downlink TBF corresponding to the MS, the BSS sets the RRBP indicators in N RLC data blocks allocated in the corresponding downlink TBF subsequently beginning from the N1th PNCD counted backwards;
wherein: M is less than or equal to M1, M and M1 are positive integers; N is less than or equal to N1, and N and N1 are positive integers.

The abovementioned method further has the following characteristics:
the signaling point is that when the BSS sends Packet Cell Change Order (PCCO) message, in the network control NC2 mode,
before the BSS triggers the MS reselection through the PCCO, if there is an uplink TBF corresponding to the MS, the BSS organizes and sends M uplink acknowledgements to the MS in M RLC data block periods before the PCCO is sent; and
before the BSS triggers the MS reselection through the PCCO, if there is a downlink TBF corresponding to the MS, the BSS sets the RRBP indicators in N RLC data blocks allocated in the corresponding downlink TBF before the PCCO is sent.

The abovementioned method further has the following characteristics:
the signaling point is that when Packet Service (PS) handover command message is sent when the PS is handed over,
when the PS handover is performed, before the BSS side initiates the PS handover command, if there is an uplink TBF corresponding to the MS, M uplink acknowledgements are organized and sent to the mobile station (MS) in M RLC data block periods before the PS handover command is sent; and
when the PS handover is performed, before the base station subsystem (BSS) side initiates the PS handover command, if there is a downlink TBF corresponding to the MS, the RRBP indicators are set in N RLC data blocks allocated in the corresponding downlink TBF before the PS handover command is sent.

The abovementioned method further has the following characteristics:
the parameters M and N are set according to a convergence status of the RLC window.

The present invention further provides a base station subsystem (BSS), comprising: a cell reselection or handover apparatus, an apparatus for releasing a radio link control (RLC) sending-receiving window and an apparatus for accelerating an RLC window state acknowledgement, wherein,
the apparatus for accelerating the RLC window state acknowledgement is configured to: in a process of the cell reselection or handover apparatus performing reselection or handover, send the RLC window state acknowledgement repeatedly to accelerate the sending and receiving of an RLC data block;
the apparatus for releasing the RLC sending-receiving window is configured to: release the RLC sending-receiving window after the cell reselection or handover apparatus completes the cell reselection or handover;
the apparatus for accelerating the RLC window state acknowledgement comprises a signaling point detection module, a Temporary Block Flow (TBF) detection module, an RLC acknowledgement control module, an uplink acknowledgement module and a downlink acknowledgement module;
the signaling point detection module is configured to: detect the signaling point in the MS reselection or handover process, and notify the TBF detection module if the detection reaches the signaling point;
the TBF module is configured to: when the signaling point is reached, detect and judge whether there is an uplink and/or downlink TBF corresponding to the MS; and if yes, then notify the RLC acknowledgement control module of the detected uplink and/or downlink TBF;
the RLC acknowledgement control module is configured to control an uplink and/or downlink TBF acknowledgement according to the following ways:
if there is an uplink TBF corresponding to a mobile station (MS), for an uplink RLC sending-receiving window, notifying the uplink acknowledgement module to continuously send M uplink acknowledgements to the mobile station (MS);
if there is a downlink TBF corresponding to the MS, for a downlink RLC sending-receiving window, notifying the downlink acknowledgement module to set Relative Reserved Block Period (RRBP) indicators in N data blocks allocated in a corresponding downlink TBF.

The abovementioned base station subsystem further has the following characteristics:
the signaling point is that when the BSS receives Packet Cell Change Notification (PCCN) message sent by the MS in a network control NC0/NC1 mode,
the signaling point detection module is configured to: detect that the BSS receives the PCCN message sent by the MS, and notify the TBF detection module;
the RLC acknowledgement control module is configured to:
   if a notification that there is an uplink TBF corresponding to the MS detected by the TBF detection module is received, control the uplink acknowledgement module to organize and send M uplink acknowledgements in a downlink Packet Associated Control Channel (PACCH) corresponding to an uplink channel allocated by the uplink TBF; and
   if a notification that there is a downlink TBF corresponding to the MS detected by the TBF module is received, control the downlink acknowledgement module to set the RRBP indicators in N data blocks allocated in the downlink TBF subsequently.

The abovementioned base station subsystem further has the following characteristics:
when the signaling point is that the BSS sends Packet Neighbor Cell Data (PNCD) message, in the network control NC0/NC1 mode,
the signaling point detection module is configured to: notify the TBF detection module by counting the number of pieces of the PNCD message in advance when sending the M1th Packet Neighbor Cell Data (PNCD) counted backwards is detected;
the RLC acknowledgement control module is configured to:
   if a notification that there is an uplink TBF corresponding to the MS detected by the TBF detection module is received, control the uplink acknowledgement module to organize and send M uplink acknowledgements in a downlink Packet Associated Control Channel (PACCH) corresponding to an uplink channel allocated by the uplink TBF beginning from the M1th PNCD counted backwards; and
   if a notification that there is a downlink TBF corresponding to the MS detected by the TBF module is received, control the downlink acknowledgement module to set the RRBP indicators in N data blocks allocated in the downlink TBF subsequently beginning from the N1th PNCD counted backwards;
   wherein: M is less than or equal to M1, M and M1 are positive integers; N is less than or equal to N 1, and N and N1 are positive integers.

The abovementioned base station subsystem further has the following characteristics:
the signaling point is that when the BSS sends Packet Cell Change Order (PCCO) message in the network control NC2 mode,
the signaling point detection module is configured to: notify the TBF detection module when it is detected that the mobile station (MS) reselection subsequently needs to be triggered through a Packet Cell Change Order (PCCO) command;
the RLC acknowledgement control module is configured to:
   if a notification that there is an uplink TBF corresponding to the mobile station (MS) detected by the TBF detection module is received, control the uplink acknowledgement module to organize and send M uplink acknowledgements to the MS in M RLC data block periods before sending the PCCO; and
   if a notification that there is a downlink TBF corresponding to the mobile station (MS) detected by the Temporary Block Flow detection module is received, control the downlink acknowledgement module to set the RRBP indicators in N RLC data blocks allocated in the corresponding downlink TBF before sending the PCCO.

The abovementioned base station subsystem further has the following characteristics:
the signaling point is that when Packet Service (PS) handover command message is sent when the PS is handed over,
the signaling point detection module is configured to: notify the TBF detection module when it is detected that the PS handover command needs to be initiated in a process of performing the PS handover;
the RLC acknowledgement control module is configured to:
   if a notification that there is an uplink TBF corresponding to the mobile station (MS) detected by the TBF detection module is received, control the uplink acknowledgement module to organize and send M uplink acknowledgements to the MS in M RLC data block periods before sending the PS handover command; and
   if a notification that there is a downlink TBF corresponding to the mobile station (MS) detected by the TBF detection module is received, control the downlink acknowledgement module to set the RRBP indicators in N RLC data blocks allocated in the corresponding downlink TBF before sending the PS handover command.

With the method and base station subsystem for accelerating the radio link control (RLC) window state acknowledgement, the uplink and downlink acknowledgements are set through the corresponding signaling point in the cell reselection / handover process, such as NACC, etc. Before the reselection, the uplink RLC data block sent by the MS and the downlink RLC data block sent by the BSS can be acknowledged as much as possible, and the uplink and downlink RLC acknowledgement window state bitmap is reduced as much as possible, the retransmission of the uplink and downlink RLC data blocks is avoided after the MS enters a new cell, and the number of the transferred logical link control (LLC) frames in the cell LLC transformation process is reduced at the same time. The quantity of the reduced retransmission and the transformation depends on the convergence status of the RLC window.

### Brief Description of Drawings

FIG. 1 is a diagram of an uplink TBF sending M uplink acknowledgements to the MS when the signaling point is PCCN message according to an embodiment of the present invention;
FIG. 2 is a diagram of a downlink TBF sending N RLC data blocks with the RRBP being set to the MS when the signaling point is PCCN message according to an embodiment of the present invention;
FIG. 3 is a diagram of an uplink TBF sending M uplink acknowledgements to the MS when the signaling point is PNCD message according to an embodiment of the present invention;
FIG. 4 is a diagram of a downlink TBF sending N RLC data blocks with the RRBP being set to the MS when the signaling point is PNCD message according to an embodiment of the present invention;
FIG. 5 is a diagram of an uplink TBF sending M uplink acknowledgements to the MS when the signaling point is PCCO message according to an embodiment of the present invention;
FIG. 6 is a diagram of a downlink TBF sending N RLC data blocks with the RRBP being set to the MS when the signaling point is PCCO message according to an embodiment of the present invention;
FIG. 7 is a diagram of an uplink TBF sending M uplink acknowledgements to the MS when the signaling point is a PS handover command according to an embodiment of the present invention;
FIG. 8 is a diagram of a downlink TBF sending N RLC data blocks with the RRBP being set to the MS when the signaling point is a PS handover command according to an embodiment of the present invention;
FIG. 9 is a module diagram of a base station subsystem for accelerating a radio link control (RLC) window state acknowledgement according to an embodiment of the present invention.

### Preferred Embodiments of the Present Invention

In order to make the object, technical scheme and advantage of the present invention much clear, the present invention is described in detail combining with the accompanying drawings hereinafter.

In the method for accelerating the Radio Link Control (RLC) window state acknowledgement provided by the present invention, the base station subsystem (BSS) makes the RLC sending-receiving window state bitmap between the mobile station (MS) and the Base Station Subsystem (BSS) corresponding to the uplink and downlink Temporary Block Flow (TBF) respectively be confirmed by the way of increasing the number of the acknowledgements of the uplink TBF or setting in a data block allocated in the TBF before the cell reselection /handover, and the retransmission of the RLC block in the uplink / downlink TBF after the cell reselection and handover of the MS is avoided, and the number of the Logical Link Control (LLC) frames which need to be transferred in the reselection process is reduced.

The method for accelerating a Radio Link Control (RLC) window state acknowledgement includes:
at a signaling point before a Mobile Station (MS) re-selection or handover, judging whether there is an uplink and/or a downlink Temporary Block Flow (TBF) corresponding to the MS, wherein:
   if there is an uplink TBF corresponding to the MS, then for an uplink RLC sending-receiving window, a BSS continuously sends M (M=1, 2, 3...) uplink acknowledgements to the MS, and sends a real-time bitmap of the uplink TBF to the mobile station (MS);
   if there is a downlink TBF corresponding to the MS, then for a downlink RLC sending-receiving window, the BSS sets Relative Reserved Block Period (RRBP) indicators in N (N=1, 2, 3...) data blocks allocated in a corresponding downlink TBF, and makes the RLC downlink sending window of the BSS side be updated through the downlink acknowledgement.

The signaling point is the time point of sending / receiving the reselection or handover signaling, each signaling point before the reselection or handover includes that:
the BSS receives Packet Cell Change Notification (PCCN) message sent by the MS in a network control NCO/NC1 mode;
the BSS sends Packet Neighbor Cell Data (PNCD) message in the network control NC0/NC1 mode;
the BSS sends Packet Cell Change Order (PCCO) message in the network control NC2 mode; and
a Packet Service (PS) handover command message is sent when the PS is handed over.

In each case of the above-mentioned signaling point, the M and N are set separately in each procedure, and are set considering the actual factor, its basic selection principle is to set according to the convergence status of the RLC window. If the convergence speed is slow due to the factors such as the slow response speed, the radio quality of the air interface, etc., then the M and N can be selected as greater numerical values; on the contrary, if the convergence speed is fast, then the smaller numerical values can be selected; and preferably the values of M, N can be 2.

In the embodiment of the present invention, through the NACC procedure in the NC0/NC1 mode, the PCCO procedure in the NC2 mode and some signaling points in the PS handover procedure, the acknowledgement process of the uplink and downlink RLC window of the air interface is accelerated before and after the MS cell reselection, thus the bitmap of the RLC window corresponding to the MS and the BSS obtains the acknowledgement as soon as possible, the unnecessary retransmission of the uplink and downlink RLC blocks and the unnecessary transformation of the LLC frame in the cell reselection / handover process are avoided.

For example, in the NC0/NC1 mode, the mobile station (MS) reselects the cell and initiates the NACC procedure in the PS service process; after the base station subsystem (BSS) of the network side receives the PCCN sent by the MS,

if there is an uplink TBF, for the uplink RLC sending-receiving window, the BSS side organizes M uplink acknowledgements continuously, and sends to the MS through the Packet Associated Control Channel (PACCH) corresponding to the uplink PDCH channel;

if there is a downlink TBF, for the downlink RLC sending-receiving window, the BSS sets the Relative Reserved Block Period (RRBP) indicators for N data RLC blocks allocated in the TBF continuously and subsequently.

For the uplink RLC sending window, the uplink acknowledgement is sent before the cell reselection; for the downlink RLC sending window, the sending of the MS downlink acknowledgement is controlled through the downlink block RRBP. The BSS sets the appropriate sending opportunities of the uplink acknowledgement and the downlink acknowledgement through each signaling point of the NACC procedure, such that the MS confirms the bitmap in the RLC sending window as soon as possible before the reselection, thus the retransmission of the data block without the acknowledgement in time sent by the MS or the BSS in some time before the reselection is avoided.

Similarly, for the PCCO procedure in the NC2 and the signaling point corresponding in the PS handover, the operation in the above NACC procedure can be performed, and part of the bitmap of the sending-receive block before the reselection is acknowledged as soon as possible after the mobile station MS reselection or handover.

The process procedure of each signaling point is described in detail combining the embodiments hereinafter.

Embodiment 1: the related operation when the Packet Cell Change Notification (PCCN) is received in the Network Assisted Cell Change (NAAC) procedure

### a. the uplink TBF operation procedure

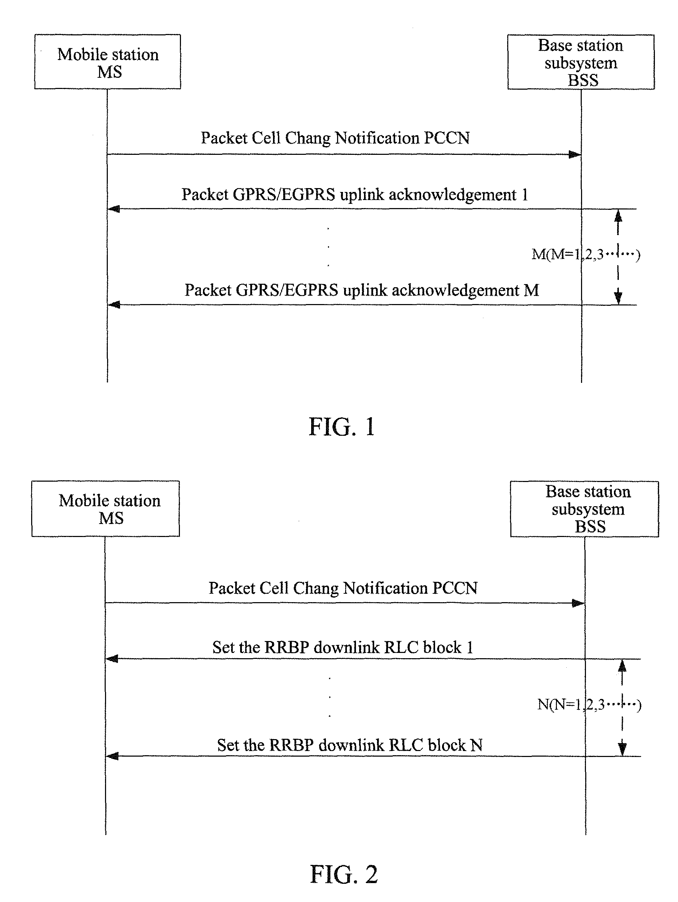

the base station subsystem (BSS) receives the Packet Cell Change Notification (PCCN) message sent by the mobile station (MS), and if there is an uplink TBF corresponding to the MS, M uplink acknowledgements are organized and sent in a downlink Packet Associated Control Channel (PACCH) corresponding to an uplink PDCH channel allocated by the uplink TBF, and the uplink TBF real-time bitmap is sent to the MS, as shown in FIG. 1.

### b. the downlink TBF operation procedure

the BSS receives the PCCN message sent by the mobile station (MS), and if there is a corresponding downlink TBF, the RRBP indicators are set in N data blocks allocated in the downlink TBF subsequently, such that the RLC sending window of the BSS side is updated through the downlink acknowledgement, as shown in FIG. 2.

Embodiment 2: the related operation when the Packet Neighbor Cell Data (PNCD) is sent in the Network Assisted Cell Change (NAAC) procedure

### a. the uplink TBF operation procedure

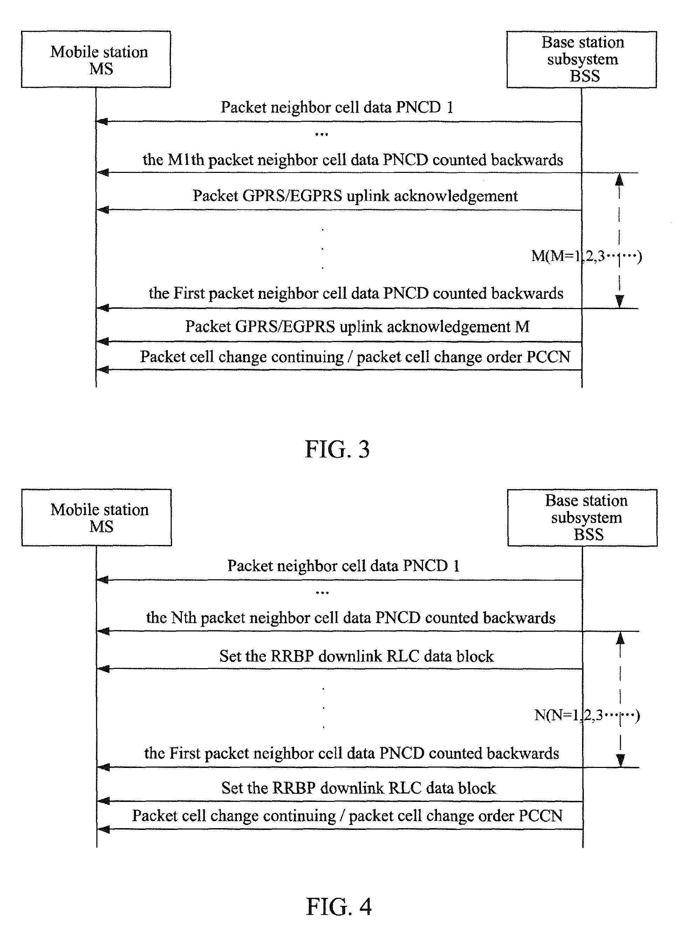

by counting the number of pieces of the PNCD message in advance, when the BSS sends the M1th PNCD counted backwards, if there is an uplink TBF corresponding to the mobile station (MS), the BSS organizes and sends M uplink acknowledgements on a downlink Packet Associated Control Channel (PACCH) corresponding to an uplink channel allocated by an uplink TBF, and the uplink TBF real-time bitmap is sent to the MS. Wherein, M is less than or equal to M1, M and M1 are positive integers. As shown in FIG. 3, the case that M=M1 is provided.

### b. the downlink TBF operation procedure

by counting the number of pieces of the PNCD message in advance, when the BSS sends the N1th PNCD counted backwards, if there is a downlink TBF corresponding to the MS, the BSS sets the RRBP indicators in N RLC data blocks allocated in the corresponding downlink TBF subsequently, such that the RLC downlink sending window of the BSS side is updated through performing the downlink acknowledgement of the downlink sending-receiving window by the MS. Wherein, N is less than or equal to N1, and N and N1 are positive integers. As shown in FIG. 4, the case that N=N1 is provided.

### Embodiment 3: the related operation when the Packet Cell Change Order (PCCO) is sent in the network control NC2 mode

### a. the uplink TBF operation procedure

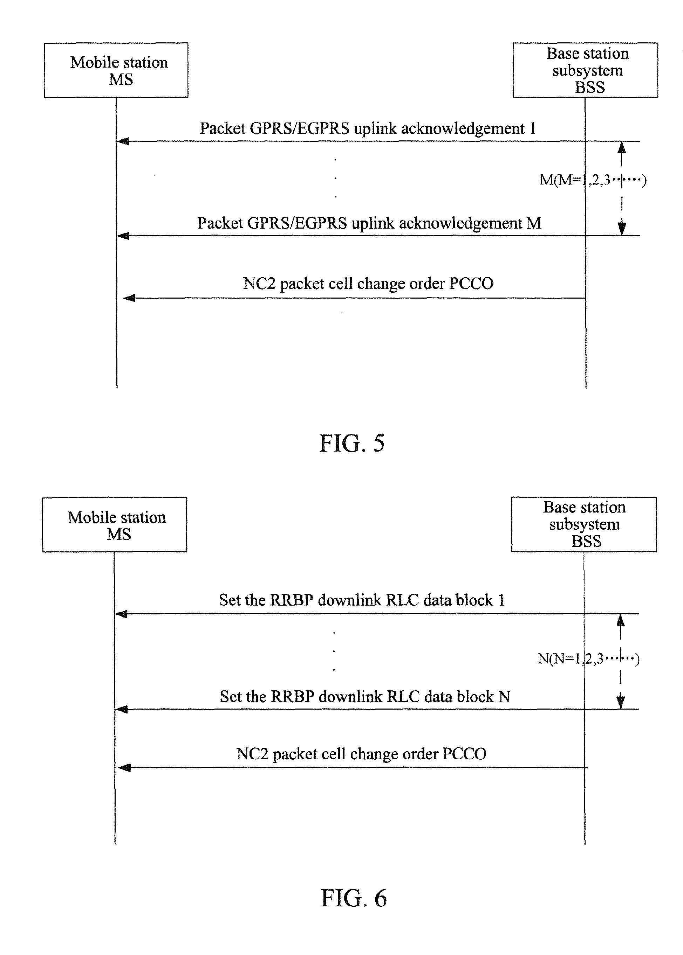

in the NC2 mode, before the BSS of the network side triggers the MS reselection through the PCCO, if there is an uplink TBF corresponding to the MS, the BSS organizes and sends M uplink acknowledgements in M RLC data block periods before the PCCO is sent, as shown in FIG. 5.

### b. the downlink TBF operation procedure

in the NC2 mode, before the BSS of the network side triggers the MS reselection through the PCCO, if there is a downlink TBF corresponding to the MS, the BSS sets the RRBP indicators in N RLC data blocks allocated in the corresponding downlink TBF before the PCCO is sent, as shown in FIG. 6.

### Embodiment 4: the related operation when the Packet Service (PS) handover command is sent in the PS handover procedure

### a. the uplink TBF operation procedure

when the PS handover is performed, the base station subsystem (BSS) side initiates the PS handover command, and if there is an uplink TBF corresponding to the MS, the BBS organizes and sends M uplink acknowledgements in M RLC data block periods before the PS handover command is sent; and

### b. the downlink TBF operation procedure

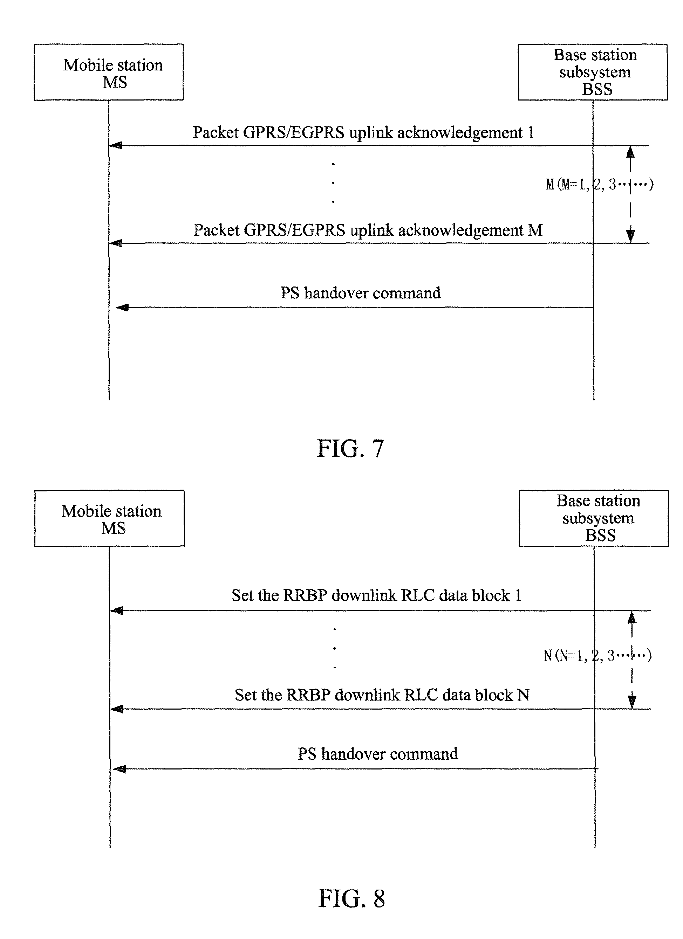

when the PS handover is performed, the base station subsystem (BSS) side initiates the PS handover command, and if there is a downlink TBF corresponding to the MS, then the BBS sets the RRBP indicators in N RLC data blocks allocated in the corresponding downlink TBF before the PS handover command is sent, as shown in FIG. 8.

In the above-mentioned embodiments 1-4, the values of M and N can be taken independently, and the values are positive integers, that is, M and N=1, 2, 3..., which means that the uplink acknowledge can be sent for one or more times in the uplink TBF; or the RRBP can be set in one or more RLC data blocks in the downlink TBF.

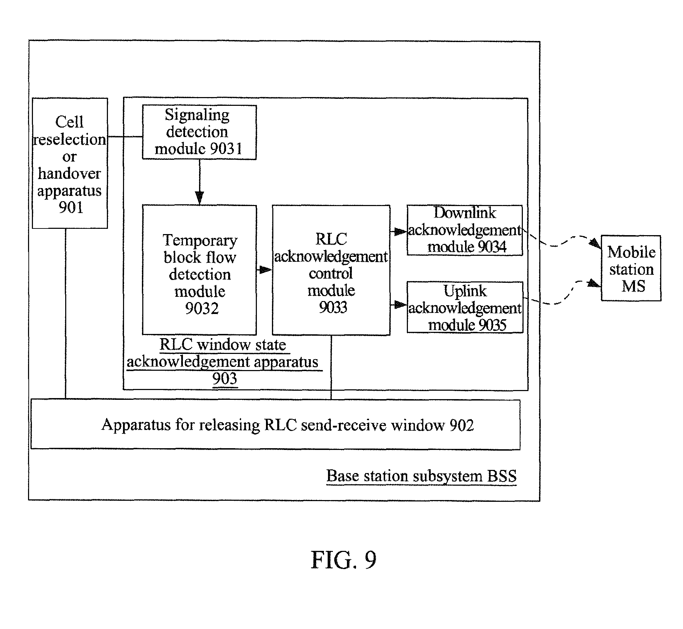

As shown in FIG. 9, a base station subsystem (BSS) is provided by the present invention, which includes: a cell reselection or handover apparatus 901, an apparatus for releasing a radio link control (RLC) sending-receiving window 902, and the base station subsystem further has an apparatus for accelerating RLC window state acknowledgement 903, configured to: in a process of the cell reselection or handover apparatus performing a reselection or handover, send RLC window state acknowledgement repeatedly to accelerate the sending and receiving of an RLC data block; and the apparatus for releasing the RLC sending-receiving window is configured to: release the RLC sending-receiving window after the cell reselection or handover apparatus completes the cell reselection or handover;
wherein, the apparatus for accelerating the RLC window state acknowledgement 903 includes:
a signaling point detection module 9031, configured to: detect the signaling point in the MS reselection or handover process, and notify the TBF detection module if the detection reaches the signaling point;
a TBF module 9032, configured to: when the signaling point is reached, detect and judge whether there is an uplink and/or downlink TBF corresponding to the MS; and if yes, then notify the RLC acknowledgement control module of the detected uplink and/or downlink TBF;
an RLC acknowledgement control module 9033, configured to control an uplink and/or downlink TBF acknowledgement:
   if there is an uplink TBF corresponding to a mobile station (MS), for an uplink RLC sending-receiving window, then notify the uplink acknowledgement module 9034 to continuously send M uplink acknowledgements to the mobile station (MS);
   if there is a downlink TBF corresponding to the MS, for a downlink RLC sending-receiving window, then notify the downlink acknowledgement module 9035 to set Relative Reserved Block Period (RRBP) indicators in N data blocks allocated in a corresponding downlink TBF.

The signaling point is that when the BSS receives a Packet Cell Change Notification (PCCN) message sent by the MS in a network control NC0/NC 1 mode,
the signaling point detection module 9031 detects the received PCCN message sent by the MS, and if the TBF detection module 9032 detects that there is an uplink TBF corresponding to the MS, then the RLC acknowledgement control module 9033 controls the uplink acknowledgement module 9034 to organize and send M uplink acknowledgements in a downlink Packet Associated Control Channel (PACCH) corresponding to an uplink channel allocated by the uplink TBF; and
the signaling point detection module 9031 receives the PCCN message sent by the MS, and if the TBF detection module 9032 detects that there is a downlink TBF corresponding to the MS, then the RLC acknowledgement control module 9033 controls the downlink acknowledgement module 9035 to set the Relative Reserved Block Period (RRBP) indicators in N data blocks allocated in the downlink TBF subsequently.

When the signaling point is that the BSS sends Packet Neighbor Cell Data (PNCD) message in the network control NC0/NC1 mode,
when the signaling point detection module 9031 detects sending the M1th Packet Neighbor Cell Data (PNCD) counted backwards by counting the number of pieces of the PNCD message in advance, and if the TBF detection module 9032 detects that there is an uplink TBF corresponding to the MS, then the RLC acknowledgement control module 9033 controls the uplink acknowledgement module 9034 to organize and send M uplink acknowledgements in a downlink Packet Associated Control Channel (PACCH) corresponding to an uplink channel allocated by the uplink TBF beginning from the M1th PNCD counted backwards; and
when the signaling point detection module 9031 detects sending the N1th Packet Neighbor Cell Data (PNCD) counted backwards by counting the number of pieces of the PNCD message in advance, and if the TBF detection module 9032 detects that there is a downlink TBF corresponding to the MS, then the RLC acknowledgement control module 9033 control the downlink acknowledgement module 9035 to set the RRBP indicators in N radio link control (RLC) data blocks allocated in the downlink TBF subsequently beginning from the N1th PNCD counted backwards;
wherein, M is less than or equal to M1, M and M1 are positive integers; N is less than or equal to N1, and N and N1 are positive integers.

The signaling point is that when the BSS sends Packet Cell Change Order (PCCO) message in the network control NC2 mode:
when the signaling point detection module 9031 detects that the mobile station (MS) reselection needs to be triggered subsequently through a Packet Cell Change Order (PCCO) command, if the TBF detection module 9032 detects that there is an uplink TBF corresponding to the MS, then the RLC acknowledgement control module 9033 controls the uplink acknowledgement module 9034 to organize and send M uplink acknowledgements to the MS in M RLC data block periods before sending the PCCO; and
when the signaling point detection module 9031 detects that the mobile station (MS) reselection needs to be triggered subsequently through a Packet Cell Change Order (PCCO) command, if the TBF detection module 9032 detects that there is a downlink TBF corresponding to the MS, then the RLC acknowledgement control module 9033 controls the downlink acknowledgement module 9035 to set the RRBP indicators in N RLC data blocks allocated in the corresponding downlink TBF before sending the PCCO.

When the signaling point is that the Packet Service (PS) handover command message is sent when the PS is handed over:
in a process of performing the PS handover, the signaling point detection module 9031 detects that the PS handover command needs to be initiated, if the TBF detection module 9032 detects that there is an uplink TBF corresponding to the MS, then the RLC acknowledgement control module 9033 controls the uplink acknowledgement module 9034 to organize and send M uplink acknowledgements to the MS in M RLC data block periods before sending the PS handover command; and
in a process of performing the PS handover, the signaling point detection module 9031 detects that the PS handover command needs to be initiated, if the TBF detection module 9032 detects that there is a downlink TBF corresponding to the MS, then the RLC acknowledgement control module 9033 controls the downlink acknowledgement module 9035 to set the RRBP indicators in N RLC data blocks allocated in the corresponding downlink TBF before sending the PS handover command.

The base station subsystem as shown in FIG. 9 performs the embodiment of accelerating the RLC window state acknowledgement for the above-mentioned four signaling points, the detailed description can refer to the embodiments 1-4, and will not be discussed any more in detail here.

It can be understood by those skilled in the art that all or part of steps in the above-mentioned method can be fulfilled by programs instructing the releted hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

The above description is only the preferred embodiments of the present invention and is not intended to limit the present invention. For those skilled in the art, the present invention can have various modifications and variations. All of modifications, equivalents and/or variations without departing from the spirit and essence of the present invention should be embodied in the scope of the appending claims of the present invention.

### Industrial Applicability

With the method and base station subsystem for accelerating the radio link control (RLC) window state acknowledgement, the uplink and downlink acknowledgements are set through the corresponding signaling point in the cell reselection / handover process, such as NACC, etc. Before the reselection, the uplink RLC data block sent by the MS and the downlink RLC data block sent by the BSS can be acknowledged as much as possible, and the uplink and downlink RLC acknowledgement window state bitmap is reduced as much as possible, the retransmission of the uplink and downlink RLC data blocks is avoided after the MS enters a new cell, and the number of the transferred logical link control (LLC) frames in the cell LLC transformation process is reduced at the same time. The quantity of the reduced retransmission and the transformation depends on the convergence status of the RLC window.

## Claims

1. A method for accelerating a Radio Link Control (RLC) window state acknowledgement, comprising:
at a signaling point in a Mobile Station (MS) reselection or handover process, judging whether there is an uplink and/or a downlink Temporary Block Flow (TBF) corresponding to the MS, wherein:
if there is an uplink TBF corresponding to the MS, then for an uplink RLC sending-receiving window, a base station subsystem (BSS) continuously sends M uplink acknowledgements to the MS;
if there is a downlink TBF corresponding to the MS, then for a downlink RLC sending-receiving window, the BSS sets Relative Reserved Block Period (RRBP) indicators in N data blocks allocated in a corresponding downlink TBF;
wherein, the M and N are parameters set independently and separately, and M and N=1, 2, 3, etc..

2. The method according to claim 1, wherein,
the signaling point is that when the BSS receives Packet Cell Change Notification (PCCN) message sent by the MS in a network control NC0/NC 1 mode,
the BSS receives the PCCN message sent by the MS, and if there is an uplink TBF corresponding to the MS, M uplink acknowledgements are organized and sent to the mobile station (MS) in a downlink Packet Associated Control Channel (PACCH) corresponding to an uplink channel allocated by the uplink TBF; and
the BSS receives the PCCN message sent by the MS, and if there is a downlink TBF corresponding to the MS, the RRBP indicators are set in N data blocks allocated in the downlink TBF subsequently.

3. The method according to claim 1, wherein,
the signaling point is that when the BSS sends Packet Neighbor Cell Data (PNCD) message in the network control NC0/NC1 mode,
by counting a number of pieces of the PNCD message in advance, when the BSS sends an M1th PNCD counted backwards, if there is an uplink TBF corresponding to the mobile station (MS), the BSS organizes and sends M uplink acknowledgements on a Packet Associated Control Channel (PACCH) corresponding to an uplink channel allocated by an uplink TBF beginning from the M1th PNCD counted backwards;
by counting a number of pieces of the PNCD message in advance, when the BSS sends an N1th PNCD counted backwards, if there is a downlink TBF corresponding to the MS, the BSS sets the RRBP indicators in N RLC data blocks allocated in the corresponding downlink TBF subsequently beginning from the N1th PNCD counted backwards;
wherein, M is less than or equal to M1, M and M1 are positive integers; N is less than or equal to N1, and N and N1 are positive integers.

4. The method according to claim 1, wherein,
the signaling point is that when the BSS sends Packet Cell Change Order (PCCO) message in the network control NC2 mode,
before the BSS triggers the MS reselection through the PCCO, if there is an uplink TBF corresponding to the MS, the BSS organizes and sends M uplink acknowledgements to the MS in M RLC data block periods before the PCCO is sent; and
before the BSS triggers the MS reselection through the PCCO, if there is a downlink TBF corresponding to the MS, the BSS sets the RRBP indicators in N RLC data blocks allocated in the corresponding downlink TBF before the PCCO is sent.

5. The method according to claim 1, wherein,
the signaling point is that when Packet Service (PS) handover command message is sent when the PS is handed over,
when the PS handover is performed, before the BSS side initiates the PS handover command, if there is an uplink TBF corresponding to the MS, M uplink acknowledgements are organized and sent to the mobile station (MS) in M RLC data block periods before the PS handover command is sent; and
when the PS handover is performed, before the base station subsystem (BSS) side initiates the PS handover command, if there is a downlink TBF corresponding to the MS, the RRBP indicators are set in N RLC data blocks allocated by the corresponding downlink TBF before the PS handover command is sent.

6. The method according to any one of claims 1 to 5, wherein,
the parameters M and N are set according to a convergence status of the RLC window.

7. A base station subsystem (BSS), comprising: a cell reselection or handover apparatus, an apparatus for releasing a radio link control (RLC) sending-receiving window, and an apparatus for accelerating an RLC window state acknowledgement, wherein,
the apparatus for accelerating an RLC window state acknowledgement is configured to: in a process of the cell reselection or handover apparatus performing a reselection or handover, send RLC window state acknowledgements repeatedly to accelerate sending and receiving of an RLC data block;
the apparatus for releasing the RLC sending-receiving window is configured to: release the RLC sending-receiving window after the cell reselection or handover apparatus completes the cell reselection or handover;
the apparatus for accelerating the RLC window state acknowledgement comprises a signaling point detection module, a Temporary Block Flow (TBF) detection module, an RLC acknowledgement control module, an uplink acknowledgement module and a downlink acknowledgement module;
the signaling point detection module is configured to: detect the signaling point in the MS reselection or handover process, and notify the TBF detection module if the detection reaches the signaling point;
the TBF module is configured to: when the signaling point is reached, detect and judge whether there is an uplink and/or downlink TBF corresponding to the MS; and if yes, notify the RLC acknowledgement control module of the detected uplink and/or downlink TBF;
the RLC acknowledgement control module is configured to control an uplink and/or downlink TBF acknowledgement by a following way:
if there is an uplink TBF corresponding to a mobile station (MS), for an uplink RLC sending-receiving window, notifying the uplink acknowledgement module to continuously send M uplink acknowledgements to the mobile station (MS);
if there is a downlink TBF corresponding to the MS, for a downlink RLC sending-receiving window, notifying the downlink acknowledgement module to set Relative Reserved Block Period (RRBP) indicators in N data blocks allocated in a corresponding downlink TBF.

8. The base station subsystem according to claim 7, wherein,
the signaling point is that when the BSS receives Packet Cell Change Notification (PCCN) message sent by the MS in a network control NC0/NC1 mode,
the signaling point detection module is configured to: detect that the BSS receives the PCCN message sent by the MS, and notify the TBF detection module;
the RLC acknowledgement control module is configured to:
if a notification that there is an uplink TBF corresponding to the MS detected by the TBF detection module is received, control the uplink acknowledgement module to organize and send M uplink acknowledgements in a downlink Packet Associated Control Channel (PACCH) corresponding to an uplink channel allocated by the uplink TBF; and
if a notification that there is a downlink TBF corresponding to the MS detected by the TBF module is received, control the downlink acknowledgement module to set the RRBP indicators in N data blocks allocated in the downlink TBF subsequently.

9. The base station subsystem according to claim 7, wherein,
when the signaling point is that the BSS sends Packet Neighbor Cell Data (PNCD) message in the network control NC0/NC1 mode,
the signaling point detection module is configured to: notify the TBF detection module by counting a number of pieces of the PNCD message in advance when sending an M1th Packet Neighbor Cell Data (PNCD) counted backwards is detected;
the RLC acknowledgement control module is configured to:
if a notification that there is an uplink TBF corresponding to the MS detected by the TBF detection module is received, control the uplink acknowledgement module to organize and send M uplink acknowledgements in a downlink Packet Associated Control Channel (PACCH) corresponding to an uplink channel allocated by the uplink TBF beginning from the M1th PNCD counted backwards; and
if a notification that there is a downlink TBF corresponding to the MS detected by the TBF module is received, control the downlink acknowledgement module to set the RRBP indicators in N data blocks allocated in the corresponding downlink TBF subsequently beginning from the N1th PNCD counted backwards;
wherein, M is less than or equal to M1, M and M1 are positive integers; N is less than or equal to N 1, and N and N1 are positive integers.

10. The base station subsystem according to claim 7, wherein,
the signaling point is that when the BSS sends Packet Cell Change Order (PCCO) message in the network control NC2 mode,
the signaling point detection module is configured to: notify the TBF detection module when it is detected that the mobile station (MS) reselection subsequently needs to be triggered through a Packet Cell Change Order (PCCO) command;
the RLC acknowledgement control module is configured to:
if a notification that there is an uplink TBF corresponding to the mobile station (MS) detected by the TBF detection module is received, control the uplink acknowledgement module to organize and send M uplink acknowledgements to the MS in M RLC data block periods before sending the PCCO; and
if a notification that there is a downlink TBF corresponding to the mobile station (MS) detected by the Temporary Block Flow detection module is received, control the downlink acknowledgement module to set the RRBP indicators in N RLC data blocks allocated in the corresponding downlink TBF before sending the PCCO.

11. The base station subsystem according to claim 7, wherein, the signaling point is that when Packet Service (PS) handover command message is sent when the PS is handed over,
the signaling point detection module is configured to: notify the TBF detection module when it is detected that the PS handover command needs to be initiated in a process of performing the PS handover;
the RLC acknowledgement control module is configured to:
if a notification that there is an uplink TBF corresponding to the mobile station (MS) detected by the TBF detection module is received, control the uplink acknowledgement module to organize and send M uplink acknowledgements to the MS in M RLC data block periods before sending the PS handover command; and
if a notification that there is a downlink TBF corresponding to the mobile station (MS) detected by the TBF detection module is received, control the downlink acknowledgement module to set the RRBP indicators in N RLC data blocks allocated in the corresponding downlink TBF before sending the PS handover command.
